# EUROPEAN PATENT APPLICATION

(11) **EP 1 122 929 A1**
(43) Date of publication of application: **08.08.2001**
(21) Application number: 00610019.2
(22) Date of filing: 07.02.2000
(51) Int. Cl.: H04L 29/06

(54) **Push of information from a server to a client**

(71) Applicant: TELEFONAKTIEBOLAGET LM ERICSSON (publ), 126 25 Stockholm (SE)
(72) Inventor: Rignell, Marten, 240 10 Dalby (SE); Ingelsten, Magnus, 246 57 Barsebäck (SE); Jönsson, Mikael, 254 54 Helsingborg (SE)
(74) Representative: Boesen, Johnny Peder

(57) **Abstract**

The invention relates to: A method of utilizing the time span between a request (101) for first pieces of information from a user unit (1; 11) to an information server (5) via a node (2) in a network and the reception of said first pieces of information (108) at the user unit (1; 11). The invention further comprises a computer readable medium, a system and a software program related to the method. The object of the present invention is to disclose an alternative method of presenting additional information to a user during the time span between a user's request for information from an information server and the reception of said information. The problem is solved in that second pieces of information (102, 104, 105, 106) are transmitted from the node (2) to the user unit (1; 11) in the time span between the reception at the node (2) of the request (101) from the user unit (1; 11) for first pieces of information, and the transmission to the user unit (1; 11) of the first pieces of information (108) received at the node (2) from the information server (5). This has the advantage that additional information may be presented to a user in a situation where he or she is awaiting requested information. The invention may preferably be used in connection with a server (3) having as clients user terminals (1; 11) with limited resources, e.g. limited by size or battery power.

## Description

### The Technical Field of the Invention:

The invention relates to a user's request for information via a network.

The invention relates specifically to: A method of utilizing the time between a request for first pieces of information from a user unit to an information server via a node in a network and the reception of said first pieces of information at the user unit.

The invention furthermore relates to: A computer readable medium having a program recorded thereon, where the program when executed is to make the computer execute the method.

The invention furthermore relates to: A computer system having means for executing a program, where the program when executed is to make the computer execute the method.

The invention moreover relates to: A software program, which can be used to execute the method.

### Description of Related Art:

The following account of the prior art relates to one of the areas of application of the present invention, the access to the Internet from a mobile communications unit, e.g. a cellular telephone, by means of a WAP browser (WAP = Wireless Application Protocol). WAP is seen as one of the enabling technologies to combine mobility and the Internet.

The presentation of additional information (e.g. advertisements) to the user during browsing is an important source of financing activities on the Internet.

To ensure a reasonable probability of appealing to the user, it is of paramount importance to be able to focus the information presented to the user on relevant themes. In the IT society we live in, understanding of consumer behaviour is of value. This information could be used both to address one specific consumer but also to follow habits and changes in consumer behaviour as a group. Many efforts are spent on making people become members of different groups to understand their shopping behaviour using customer identity cards with some sort of preferences. Other methods for gaining access to customer habits are questionnaires, consumer groups, etc.

In normal HTML browsing (HTML = HyperText Markup Language), it is quite easy to attract the consumer's attention to a colourful moving object on a full size VGA screen of a desktop or laptop computer, using only a part of the screen for the advertisement and thus leaving enough space for the actually requested information. When browsing the Internet with a WAP browser on e.g. a three-line, text based display of a mobile communications unit the situation is quite different.

The limited display sizes of mobile communications devices necessitate special handling of the presented information. This may e.g. be done by using WML (WML = Wireless Markup Language), a specially developed format for presenting information using a WAP browser (corresponding to HTML of a normal browser). The WAP browser is a relatively simple 'micro-browser' requiring only limited resources of the mobile communications device.

Still, however, the method used in the prior art of presenting additional information to the user during his or hers browsing for other information may not be directly transferred to the case of a WAP-browsing on a relatively small size display.

Hence there is a need for an alternative method.

### Summary:

The object of the present invention is to disclose an alternative method of presenting additional information to a user during the time span between a user's request for information from an information server and the reception of said information.

This is achieved according to the invention in that second pieces of information are transmitted from the node to the user unit in the time span between the reception at the node of the request from the user unit for first pieces of information, and the transmission to the user unit of the first pieces of information received at the node from the information server.

The advantage of the invention is that it discloses a method of presenting second pieces of information to a user at times where the user is waiting for a response to a request for other information and thus potentially open for the reception of news or messages. The invention is especially relevant in cases where a limited display size is available (i.e. where there is a need for using the full screen for each piece of requested information) and/or in cases where a limited bandwidth is available (resulting in relatively longer transmission times). Both limitations exist for state of the art mobile communications devices.

The time span between
□ the reception at the node of the request from the user unit for first pieces of information, and
□ the transmission to the user unit of the first pieces of information received at the node from the information server
represents the 'idle' time between the user's request of information and the possible presentation of said information to the user *plus* the (optional) time where the requested information is held (i.e. stored before actually forwarded) at the node from where the additional information is forwarded (all time statements are referred to the node).

In the present context the term 'node' is taken to mean a point in the network where it is possible to gain access to the requests for information from the user unit. The node should preferably be located in the network in such a way that the delays between the user and the node (and back) are relatively smaller than the delays between the node and the server containing the information requested by the user (and back).

In the present context the terms 'second pieces of information' and 'additional information' are taken to mean pieces of information that are not requested by the user at the point in time where they are forwarded to the user. The contents of the second pieces of information may be specified by the user at an earlier point in time or they may be determined by another party, possibly adjusted to the presently or previously requested information from the user unit or to the location of the user unit, etc.

When second pieces of information are transmitted from the node to the user unit in the time span between the reception at the node of the request from the user unit for first pieces of information, and the reception of the first pieces of information at the node, it is ensured that the user is exposed to the second pieces of information only in the time span where he would be waiting anyway.

When the time between the reception at the node of the request from the user unit for first pieces of information, and the transmission to the user unit of the first pieces of information received at the node from the information server is greater than a predefined minimum value, it is ensured that the minimum time available for presenting second pieces of information may be controlled.

When the requests for first pieces of information are defined by a resource locator, for example a URL, it is. ensured that a standardized and associative' (i.e. potentially meaningful as to contents) way of addressing files and other electronic resources in a network is provided.

In the present context the term resource locator' is taken to mean a scheme for unambiguously defining the name of a file or other electronic resource located in a computer some place in a network. A resource locator could be a URL (Uniform Resource Locator).

When the second pieces of information that are pushed to the user unit are provided with the same resource locator as that of the requested first pieces of information, it is ensured that the user unit will accept to present the second pieces of information before the actually requested information has been received.

When the contents of the second pieces of information are determined by another party than the user, it is ensured that a method of managing the data presented to the user unit is provided.

In the present context, the term 'another party than the user' is taken to mean e.g. a provider of services relating to communications or any other party that may wish to present information to the user unit in question.

When the second pieces of information are advertisements, it is ensured that the method represents a way of financing activities. Examples could be activities such as an Internet subscription, a telephone subscription or other services.

When the contents of the second pieces of information are determined by the user in the form of e-mail, news, travel reports or other information chosen in accordance with stated user preferences, it is ensured that information according to the user's preferences may be presented in the waiting time. This may be part of a business deal between the user and a service provider. The waiting time may for example be utilized to update the user with relevant information. Other subjects specified by the user could be entertainment (jokes, information on coming programs on preferred TV channels or on preferred subjects, etc.), sports, etc.

When the second pieces of information are customized according to the location of the user unit, the date or some other special criterion, it is ensured that information of relevance to the user's current local environment, to special dates (Christmas, day of the week, time of the day, etc.) or to other events may be conveniently presented to the user.

When the request from the user unit is made by means of a browser, for example a WAP browser, it is ensured that a convenient way of communicating with computers in a network is provided. By using a micro-browser such as a WAP browser, it is ensured that the method may be conveniently initiated from a terminal with minimal resources as regards computing power, memory and electrical power (compared to a state of the art personal computer), e.g. from battery driven devices.

In the present context, the term browser' is taken to mean a piece of software for locating, obtaining and viewing information in a data communications network. The functions of a browser comprise (among other things): Addressing files and other electronic resources in a network, retrieving (i.e. copying and downloading and saving locally in a memory) information from a server via a network, viewing information remotely or locally, etc.

When a new request for first pieces of information is initiated on the basis of second pieces of information, it is ensured that the user may pursue links appearing in the second pieces of information pushed to the user unit before the requested information has been forwarded, and consequently terminate the original' request for first pieces of information, thus representing a re-initiation of the method. The link pursued on said second pieces of information may alternatively not be regarded as a new request for first pieces of information.

When the communication between the user unit and the information server is performed via a data communications network, for example the Internet or an intranet, it is ensured that a distributed amount of data are within reach of the user unit.

In the present context, the term the Internet' is taken to mean a publicly accessible, possibly global data communications network connecting users over a geographically scattered area.

In the present context, the term 'an intranet' is taken to mean a data communications network connecting users in a particular company or organization, the users being situated at the same location (e.g. a company site) or over a geographically scattered area (e.g. connecting the various subsidiaries of a company or groups of an organization). In this case the node of a network' may be a server of the intranet.

When the node is located at the central office of a provider of access to the Internet for the user unit, for example a provider of mobile communications services for the user unit, it is ensured that all requests from the user unit for information on the Internet are available for analysis and push of information to the user unit, and that all steps of the method for a given request from a given location may be performed by the same server.

In the present context, the term central office' is taken to mean a location where some sort of routing of traffic is performed, typically a site where switching equipment and/or servers are located and where some sort of handling of the requests from the user unit' takes place. It may, however, also be interpreted as the collection of distributed switches and servers that constitute the nodes of the network of a given operator and its partners (e.g. partners with whom a roaming agreement is made in the case of mobile communications). In other words, when the node is said to be located at a central office of a service provider, it may be interpreted as being distributed over the nodes of the network of said service provider (and its partners).

In the present context, the term 'push of information' is taken to mean the forwarding of information that is not a response to a corresponding request of information.

When the user unit is a mobile communications unit, for example a cellular telephone or a personal organizer, it is ensured that information on the location of the user is available from the system handling the communication to and from the user unit, and that a large and rapidly growing stock of devices may be reached.

When a database of information is used to define the contents of second pieces of information to be transmitted from the node to the user unit, it is ensured that second pieces of information may be presented to the user unit depending on the requested information from the user.

A method of utilizing the time span between a request for first pieces of information from a user unit to an information server via a node in a network and the reception of said first pieces of information at the user unit is moreover provided by the present invention. When second pieces of information are transmitted from the node to the user unit after the reception at the node of the request from the user unit for first pieces of information and a database of information is used to define the contents of said second pieces of information, it is ensured that the method may be utilized by the user as a way of getting information concerning a special subject presented (based on the request for first pieces of information) or other information possibly agreed on between the user and the service provider.

When the database of information is searchable with respect to elements of said requests, and the database contains additional information related to said elements of said requests, and criteria for relating elements of said requests to said additional information are established, it is ensured that the provision of second pieces of information may be managed according to a predefined (and possibly currently updated) collection of reference information.

In the present context the term 'elements of (said) requests' is taken to mean those parts of the request from a user unit for information from an information server' that may be meaningfully interpreted either directly in the form of ASCII text or via a translation (e.g. in the form of a lookup table) and compared with 'known elements' to arrive at a decision whether the request in question should be assigned to a given group or not.

In a preferred embodiment the method comprises the use of a database, said database comprising a list of requests for first pieces of information subdivided into groups according to a predefined scheme, for providing information to a user unit, and the steps of comparing a received request for first pieces of information from a user unit with said list of requests for first pieces of information, thus identifying a group of information, and providing a second piece of information to the user unit corresponding to the identified group.

When the list of requests for first pieces of information in the database of information is regularly updated, for instance according to frequently used requests, it is ensured that a database that reflects user behaviour as a group may be developed from an arbitrary starting point. It is further ensured that a database of information on individual user behaviour may be automatically built, allowing the information pushed to the user to be made relevant to the user on an individual basis, opening further commercial aspects for the invention (such as pushing individually customized commercial information to the user, e.g. utilizing information on the present location of the user, the day of the week, the time of the day, etc.).

In a preferred embodiment the second pieces of information in the database are regularly updated.

When the response times at different points in time for at least some of the requested resource locators are recorded in the database and used to define the duration of the second pieces of information, it is ensured that messages of relevant timely duration may be selected from the database with a view to its presentation to the user and the point in time of the request and thus that an optimal use of the waiting time for the requested information may be achieved.

In a preferred embodiment, the method comprises the steps of receiving a request for first pieces of information from a user unit in the form of a resource locator, saving said requested resource locator, comparing said requested resource locator with known resource locators of a database, said known resource locators being organized in groups according to a predefined scheme, identifying a particular group of information among the groups of known resource locators based on said comparison, selecting a second piece of information to push to the user unit according to the identified group, and transmitting said second piece of information to said user unit.

When the method further comprises the step of attaching the requested resource locator to the selected second piece of information before transmitting it to the user unit, it is ensured that a second piece of information is accepted by the user unit, even if the software responsible for the transmission and reception of information only accepts to receive information for which the resource locator equals that of the requested information (as is the case, for example, for a WAP browser).

When several second pieces of information are transmitted to the user unit, it is ensured that more than one information package may be pushed to the user unit in the time before the requested information is transmitted to the user unit.

In a preferred embodiment the method further comprises the steps of transmitting said request for first pieces of information to the corresponding information server, and receiving said requested first pieces of information from the corresponding information server, and transmitting said requested first pieces of information to said user unit.

When the method further comprises the step of storing said requested first pieces of information from the corresponding information server before they are transmitted to the user unit, it is ensured that the time available for pushing second pieces of information to the user unit may be controlled.

When the method comprises the step of identifying a particular group of information among the groups of known resource locators according to said comparison, if a match with said requested resource locator is found among the known resource locators of the database, and identifying a particular group of information among the groups of known resource locators according to a predefined scheme, if no match with said requested resource locator is found among the known resource locators of the database, it is ensured that a scheme for presenting second pieces of information from a relevant group to the user unit in all cases is provided.

When the method further comprises the step of saving said requested resource locator for possible later addition to the database of known resource locators if no match with said requested resource locator is found among the known resource locators of the database, it is ensured that a procedure for updating the database is provided.

When the method further comprises the step of identifying the most frequently requested group or groups of information from a given user unit, and selecting second pieces of information to push to the user unit according to said most frequently requested group of information, if no match with said requested resource locator is found among the known resource locators of the database, it is ensured that a database of individual user behaviour may be built and that information of related thereto may be pushed to the user unit.

In a preferred embodiment, the method further comprises the steps of starting a timer when transmitting the request for first pieces of information to the corresponding information server, and checking the timer when receiving said requested first pieces of information from the corresponding information server, and transmitting the requested first pieces of information to the user unit, if the checked time is greater than a predefined time, and delaying the transmission of the requested first pieces of information to the user unit, if the checked time is less than a predefined time, until the predefined time has elapsed before transmitting the requested first pieces of information to the user unit.

A computer readable medium having a program recorded thereon, where the program when executed is to make the computer execute the method is furthermore provided by the present invention.

A computer system having means for executing a program, where the program when executed is to make the computer execute the method is furthermore provided by the present invention.

A software program, which can be used to execute the method is moreover provided by the present invention.

### Brief Description of the Drawings:

The invention will be explained more fully below in connection with a preferred embodiment and with reference to the drawings, in which:
fig. 1 shows a sequence of steps involved in the presentation of requested and pushed information to a mobile communications unit according to the invention,
fig. 2 shows an example of the timing of events during a request for information from a user unit according to the invention,
fig. 3 shows a sequence of steps involved in the use of a database for selecting the information to be pushed to the user unit,
fig. 4 shows details of the steps involved in the use of a database for selecting the information to be pushed to the user unit,
fig. 5 shows a flowchart for a software program for a server according to the invention, and
fig. 6 shows a flowchart of details of a software program for a server according to the invention.

The figures are schematic and simplified for clarity, and they just show details which are essential to the understanding of the invention, while other details are left out. Throughout, the same reference numerals are used for identical or corresponding parts.

### Detailed Description of Embodiments:

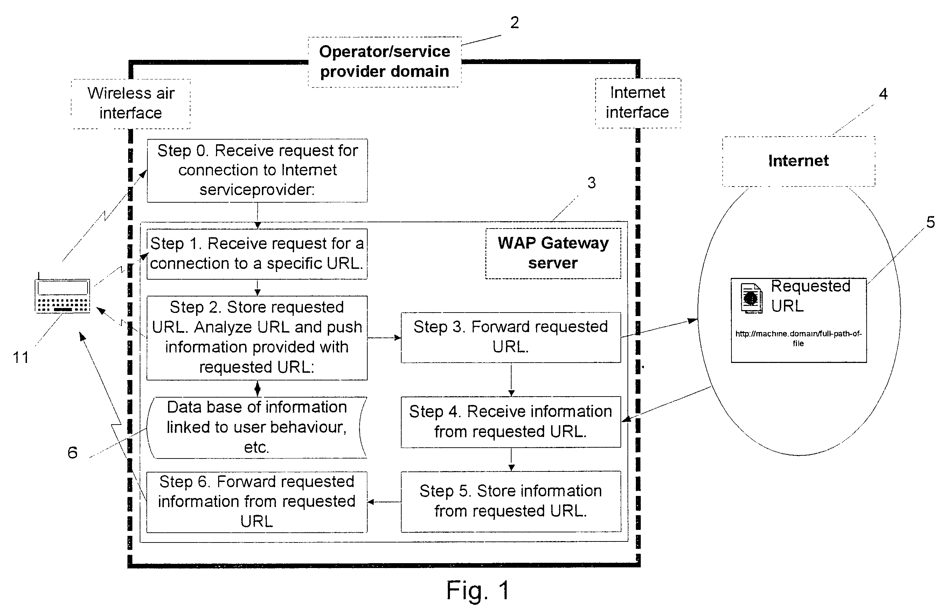

Fig. 1 shows a sequence of steps involved in the presentation of requested and pushed information to a mobile communications unit according to the invention.

Fig. 1 illustrates an embodiment of the invention, which makes it possible to push information to the WAP browser of a mobile communications user unit 11, e.g. a cellular telephone, via a WAP Gateway server 3 located at the central office 2 of a provider of mobile communications services of the user unit in question. The information is pushed to the user unit during a request from the user unit for information from a particular home page 5 on the Internet 4.

WAP is a de facto standard for providing access to the Internet from digital mobile communications devices and other devices with limited resources.

The WAP-specifications are drawn up by the Wireless Application Protocol Forum Ltd. (WAP Forum), a group of companies predominantly active in the mobile communications area. Details of the specifications may be found on the home page of WAP Forum on the Internet http://www.wapforum.org.

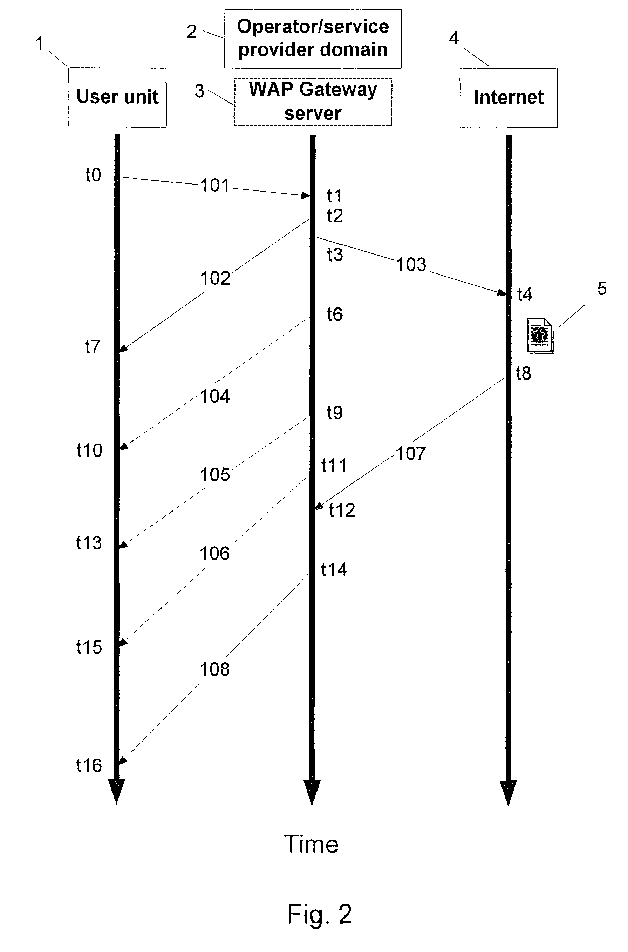

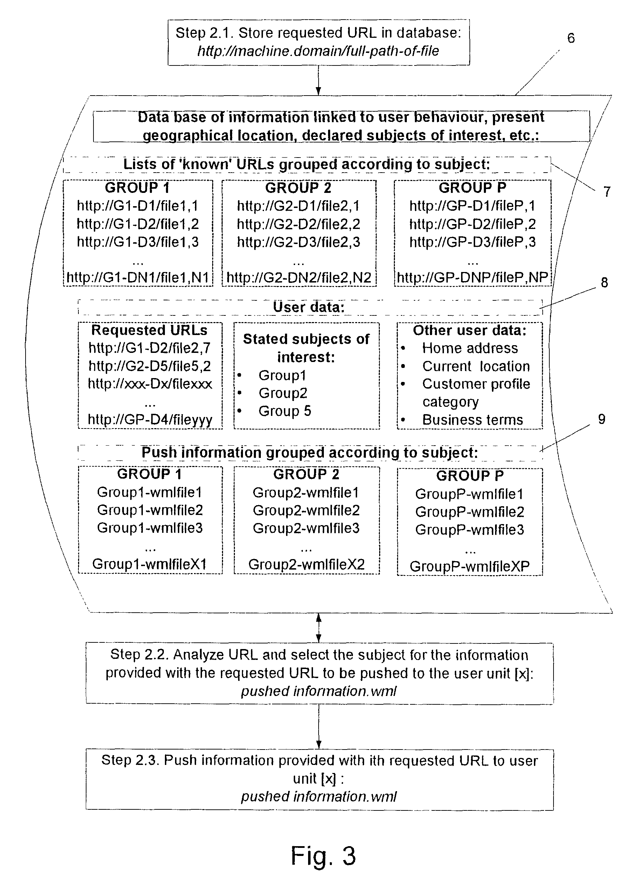

Important aspects of the invention are briefly summarized as follows (each step being further detailed below): When the end user has made the connection (step 0), it is theoretically possible at any point to break the traffic flow, examine the contents of the request (URL), forward (step 3) the URL request, but send (step 2) another message (given the requested URL) down to the end user. This message could be information or advertising. The contents of the message may be based on the contents of the current request or may be founded on a database of information of previous user behaviour. After its reception (step 4), the requested message may, if convenient, be stored in the gateway server for y seconds (cf. step 5), e.g. to allow the pushed message a certain amount of time on the screen of the user unit before it is replaced by the requested information (step 6). The substitution could be handled by an automatic refresh request or by an automatic request for the original URL. See figs. 1 and 2.

In the following the individual steps of an embodiment of the method are described with reference to figs. 1 and 2.

**Step 0:** The process is initiated from the user unit 11 in that a request for a connection to the Internet service provider is forwarded (if the user is not already connected). The Internet service provider may be the same as the provider of mobile communications services (or the latter may provide access to WAP services directly) or another entity, possibly located elsewhere. In fig. 1 it is assumed that a WAP Gateway server 3 located at the premises 2 of the provider of mobile communications services takes care of the main process steps of the method according to the invention. The various steps of the method may be handled by different servers possibly located in different parts of the network, however, if appropriate.

**Step 1:** A request 101 from the user unit for information located at a specific server connected to the Internet 4 is received at the WAP Gateway server 3 in the form of an http-URL (see the following).

The Uniform Resource Locator (URL) represents a scheme for unambiguously defining the name of a file or other electronic resource located in a computer some place in a network.

The URL as defined by RFC 1738 (short for Request for Comments" document no. 1738 of the "Network Working Group" of "The Internet Society") and later updates (e.g. RFC 1808 and RFC 2368, cf. e.g. the home page on the Internet of The RFC Editor': http://www.rfc-editor.org) characterize the syntax and semantics of formalized information for location of and access to resources via the Internet.

URLs follow the format of:
<scheme>:<scheme-dependent-information>

Examples of various *schemes* are "http" (HyperText Transfer Protocol), "gopher", "ftp" (File Transfer Protocol), "news", and "mailto". Most schemes include two different types of information: the Internet machine making the file available and the "path" to that file. With these types of schemes, the scheme is generally separated from the Internet address of the machine with two slashes (//), and then the Internet address separated from the full path to the file with one slash (/). FTP, HTTP, and Gopher URLs generally appear in this fashion:
scheme://machine.domain/full-path-of-file

HTTP is the Internet protocol specifically designed for use with the World Wide Web. Its syntax is:
http://<host>:<port>/<path>?<searchpart>

The *host* is the Internet address of the WWW server, and the *port* is the port number to connect to. In most cases, the *port* can be omitted (along with the preceding colon), and it defaults to the standard "80". The *path* tells the WWW server which file you want, and if omitted, indicates that you want the "home page" for the system. The *searchpart* may be used to pass information to the server, but is not used for most WWW documents. Generally, this part of the URL is omitted, along with the preceding questionmark.

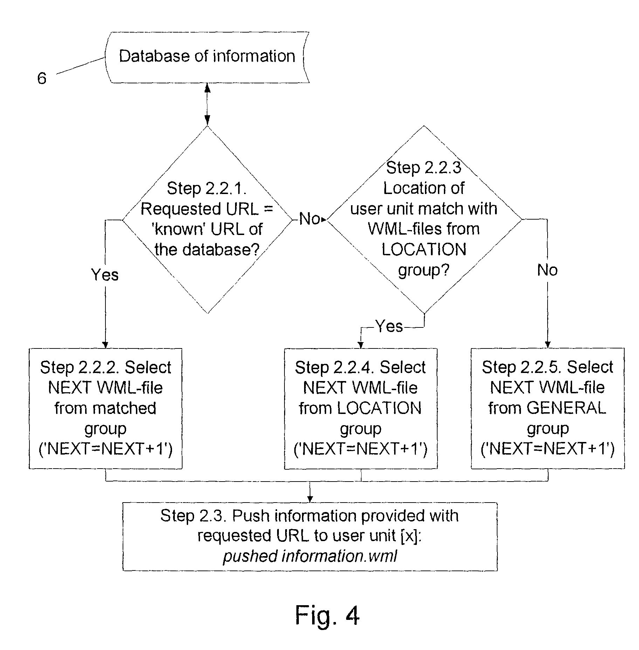

**Step 2:** The requested URL 101, e.g. in the format *http://machine.domain/full-path-of-file* (cf. step 2.1 in fig. 3) is optionally stored in a database 6 and optionally analysed to determine the theme of a message that is pushed to the user unit 11 (a special embodiment describing aspects of building a database of user behaviour is disclosed in relation to figs. 3 and 4 below) . The message 102 that is pushed to the user unit is not requested by the user at the same time as the requested URL 101. The contents of the message could be information or advertising. The contents of the message may be decided in many different ways, for example:
□ It may be limited to one and the same predefined message by every request.
□ It may be selected among a range of predefined messages, forwarding at a given request the next one' in a cyclical run through' of the predefined messages.
□ It may be based on the contents of the current request by analysing the URL and selecting the predefined message among a group of messages that correspond to the requested URL according to some predefined criteria.
□ It may be founded on a database of information of previous user behaviour relating the contents of the requested URLs to a group of themes of relevance from which the messages to be pushed to the user are chosen cf. the embodiment shown in figs. 3 and 4 and described below.
□ It may be based on the user's stated wishes such as:
   o New e-mails
   o News
   o Travel reports
   o Any other user-defined subject(s).

In the embodiment of fig. 1, it is assumed that the information forwarded to the user unit 11 is formatted using WML (as indicated e.g. in figs. 3 and 4 by the file name of the pushed data *pushed information.wml*) but any other format readable by the browser of the user unit 11 could be used.

The pushed message 102 is given the URL of the requested message 101, to make the WAP browser accept it. This is important because the WAP browser of the user unit 11 will try to match the URL of any incoming information with the requested URL 101.

The pushed message 102 could e.g. include a life timer, which after x seconds makes the message disappear and is substituted by the requested message (steps 4, 5 and 6).

**Step 3:** The requested URL 101 (in the form of the message 103) is forwarded from the WAP Gateway server 3 to the relevant server 5 on the Internet 4.

**Step 4:** The requested information 107 is received at the WAP Gateway server 3. In the embodiment of fig. 1, it is assumed that the information 107 is formatted using WML (as indicated by the file name *requested information.wml*). If the requested information is formatted in HTML, a further step comprising translation to WML format may be included, e.g. in the WAP Gateway server.

**Step 5:** The requested information 107, *'requested information. wml*', is stored in the WAP Gateway server 3. The requested information may be forwarded immediately to the user unit 11 (1 in fig. 2), or it may alternatively be withheld' at the WAP Gateway server 3 for a certain amount of time (t14-t12 in fig. 2) depending on the intended 'duration' of the pushed message. The intended extra delay of the requested information at the WAP Gateway server 3 may be decided in several ways, including the following one: It may be part of a business deal between the user and the service provider that the user is exposed to pushed information at the service provider's choice (or grouped according to the user's stated interests) for a certain amount of time during a request for information from the Internet (e.g. a fixed number of seconds during each request, a variable number of seconds depending on the contents of the pushed information, etc.).

**Step 6:** The requested information 108, *'requested information.wml',* is forwarded to the user unit. This terminates a cycle of the method.

The method may be initiated at every user request or preprogrammed in the WAP server 3 to be activated only every second, fifth or 10th request, or every so and so often, or every 2 minutes, etc., during a session.

In a special embodiment of the invention, a request for first pieces of information may be initiated from a piece of second, pushed information, e.g. in that a link on a pushed piece of information is activated by the user. In this case, the URL of the link is thus taken as a new request for first pieces of information. In another embodiment of the invention the activation of a link on a pushed piece of information is *not* taken as a new request for first pieces of information, but the initiation of the method is performed by any other means, e.g. one of those mentioned in the preceding paragraph.

In a special embodiment of the invention the request for first pieces of information is utilized by the user to have sent to himself second pieces of information belonging to a special subject (e.g. SPORTS if the requested information was a reference to an information server containing sports information) without having a time limit on the available time for pushing information. In that case the requested information is only used as an initiator of the process of pushing information to the user and the requested information in itself is not wanted and not transmitted to the user. This mode' may e.g. be controlled by forwarding a specific URL to the WAP server before the requested URL or may be arranged in any other convenient fashion, optionally allowing the user to control the time available for push of information (optionally greater than a preset minimum time).

Fig. 2 shows an example of the timing of events during a request for information from a user unit according to the invention.

The request 101 for information from the user unit 1 is initiated at time t0 and received at the WAP Gateway server 3, located at the domain of the service provider 2 of the user unit 1, at time t1. At time t2, a package 102 of information is pushed to the user unit 1 from the WAP Gateway server 3 and the pushed information 102 is received at the user unit 1 at time t7. The request 103 for information is forwarded to the information server 5 on the Internet 4 from the WAP Gateway server 3 at time t3 and received at the relevant information server 5 on the Internet at time t4. The requested information 107 is forwarded from the relevant information server 5 on the Internet at time t8 and arrives at the WAP Gateway server 3 at time t12. The requested information 108 is forwarded from the WAP Gateway server at time t14 and arrives at the user unit at time t16. This closes one cycle of request for information from a user unit. The dotted arrows 104, 105, and 106 in fig. 2 represent optional further packages of information that may be pushed from the WAP Gateway server 3 to the user unit 3 in the time between the first push of information 102 initiated at the WAP Gateway server at time t2 and the terminating forwarding of the requested information 108 to the user unit occurring at time t14. In fig. 2, the second package 104 of information optionally pushed to the user unit is forwarded from the WAP Gateway server 3 at time t6 and received at the user unit 1 at t10. For the third 105 and fourth 106 packages, the corresponding times in fig. 2 are t9, t13 and t11, t15, respectively. The number of packages that may be practically pushed to the user unit in the timespan between t2 and t14 is of course only limited by the actual circumstances, such as the actual time span between t2 and t14, the available bandwidth for the transmission to the user unit, the processing resources of the user unit, the desired time of presentation on the display of the user unit of each piece of information, etc.

In fig. 2, the request 103 for information is forwarded to the information server 5 on the Internet 4 from the WAP Gateway server 3 at time t3 occurring after the time t2 where a package 102 of information is pushed to the user unit 1 from the WAP Gateway server 3 (i.e. t3 > t2). The occurrence in time might as well be the opposite (i.e. t3 < t2).

Fig. 3 shows a sequence of steps involved in the use of a database for selecting the information to be pushed to the user unit.

A database of information 6 for use in connection with the present invention basically contains a list of known URLs grouped according to some predefined scheme such as finance/sports/news/entertainment, etc., the scheme of the yellow pages', the patent or trade mark classifications or some other scheme of a relevant complexity. Additionally, means for analysing an incoming URL request should be provided, and based thereon it is decided to which group the requested URL belongs.

A database 6 for this purpose may be used and updated as long as it is possible to extract the URL from the message 101 (in fig. 2) with the request for information from the user unit. The mobile communications service provider (e.g. a GSM operator) has the immediate possibility of handling this as long as it serves as an Internet access point as well. The contents of the database may be analyzed to improve the understanding of consumer behaviour. When extracting the URL, it is possible to analyze the URL and put it into a category (finance/sport/news/ entertainment, etc.). It would be rather efficient to combine this with information push and e.g. send back information such as commercials to the user unit.

In a special embodiment of the invention, as depicted in fig. 3, the URL of the requested information is stored in a database 6, cf. **step 2.1**. The database 6 contains a list 7 of 'known' URLs (e.g. the currently most frequently requested URLs of a given search engine or of a frequently visited portal), grouped according to some scheme, e.g. sports, finance, nature, film, etc. Corresponding to each group (termed GROUP 1, GROUP 2, .., GROUP P in fig. 3), the database 6 contains a number of packages 9 of information (termed Group1-winlfileI, I=1, 2, .., X1, Group2-wmlfileJ, J=1, 2, .., X2, etc.) adapted to be pushed to the user unit in WML format. In a special embodiment of the invention, instead of the actual packages of information in WML format only references (links) to said information are stored in the database 6.

In **step 2.2** the requested URL is compared to the list 7 of known' URLs of the database 6. If a match is found on a part of it, optionally including the domain name (*'machine*.*domain*' in the prototype http-URL above and 'GX-DY' in fig. 3, respectively), a message corresponding to the identified group (e.g. GROUP k) is pushed to the user unit (the messages are termed GroupX-wmlfileY (X=1, 2, .., P, Y=1, 2, .., XX) in the list 9 in fig. 3). If no match is found, a message from a group (e.g. GROUP n) determined by some other criterion may be pushed to the user unit. Such criteria may be:
□ The message is chosen from a default 'GENERAL' group of messages.
□ The message is chosen from the most frequently allocated group for the user in question.
□ The message is chosen from the most frequently allocated group among all users.
□ The message is chosen from the last allocated group for the user in question.
□ The message is chosen from a group predefined by the user.

If an URL that may not be grouped on the basis of the stored URLs in the database is frequently requested, a procedure for including it into the list 7 of known' URLs may be activated by analyzing the words in the string constituting the URL and deciding whether one or more words (or strings) in the URL may be correlated to the group names used. If no match is found, the URL may be 'called up', and the 'document itself' be analyzed in the same way for the occurrence of the standard group names and corresponding acronyms. Alternatively, a manual procedure may be implemented.

In fig. 3 data 8 for only one user is shown. Of course, data for several users may be handled by the same server, using the same Lists of known' URLs grouped according to subject" 7 and "Push information grouped according to subject" 9.

In **step 2.3** the selected message, provided with the URL of the requested information (101 in fig. 2), is pushed to the user unit [x].

In a special embodiment of the invention, the same database is used for all (or many) users, in that the contents of the information to be pushed to the user unit are determined solely on the basis of the current request from the user unit. If e.g. the current request from a user may be grouped under the heading TRAVEL INFORMATION, one or more pieces of information relating thereto, e.g. a travel report, an offer for flights, an advertisment for other products related to traveling, such as clothing, equipment, etc., might be pushed to the user unit in question.

Fig. 4 shows details of the steps involved in the use of a database for selecting the information to be pushed to the user unit.

The flowchart in fig. 4 illustrates a preferred embodiment of the invention, detailing step 2.2 of fig. 3.

In **step 2.2.1** an attempt to match the requested URL with those already stored in the database 6, cf. the Lists of known' URLs grouped according to subject" 7 in fig. 3, is made. If a match is found in step 2.2.1, then in **step 2.2.2** the NEXT WML file from the corresponding GROUP is selected for forwarding to the user unit (denoted *pushed information.wml'* in step 2.3 of figs. 3 and 4). The parameter NEXT of the corresponding group of WML files is incremented for the particular user unit [x] so that each file on the list of WML files is presented in a cyclical fashion to the user unit [x].

If no match of the requested URL is found among the known' URLs of the database in step 2.2.1, then in **step 2.2.3** an attempt to match the present location of the user unit with a group of LOCATION dependent WML files is made. A group of LOCATION dependent WML files is not specifically indicated in fig. 3, but it could be any one of the GROUPS 1, 2, ..., P.

If a match with a LOCATION-dependent WML file of the database is found in step 2.2.3, then in **step 2.2.4** the NEXT WML file from the corresponding group is selected for forwarding to the user unit. Again, the parameter NEXT of the corresponding group of WML files is incremented for the particular user unit [x].

If no match is found in step 2.2.3, then in **step 2.2.5** a WML file from a GENERAL group of WML files of the database is selected for forwarding to the user unit. Similarly, the parameter NEXT of the corresponding group of WML files is incremented for the particular user unit [x]. Alternatively, the WML file to be pushed to the user unit could be taken from a special group of WML files corresponding to stated user interests.

Other criteria for selecting relevant information to push to the user unit may be chosen, e.g. depending on the day of the week (information relating to leisure and sports on Sundays, information relating to business matters on weekdays, information relating to foods around dinner time, etc.), cf. also the ones mentioned above in relation to fig. 3.

In **step 2.3** the selected message, provided with the URL of the requested information (101 in fig. 2), is pushed to the user unit [x].

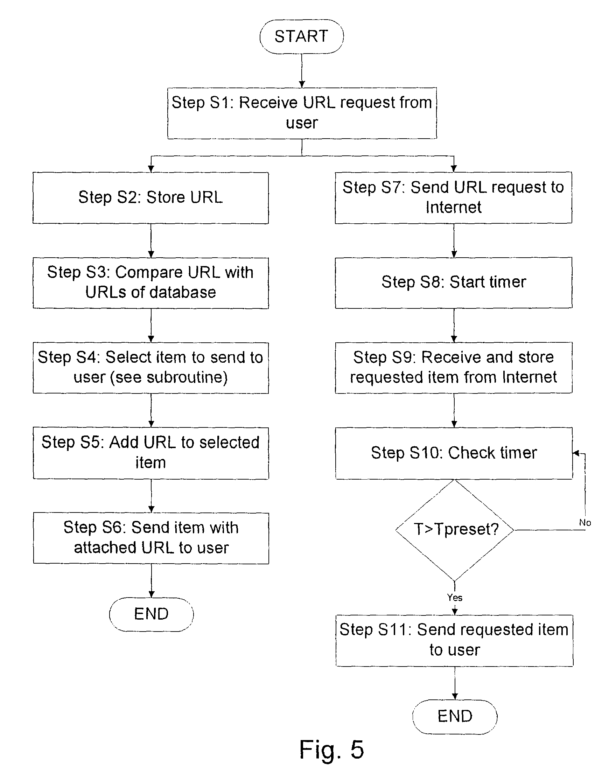

Fig. 5 shows a flowchart for a software program for a server according to the invention.

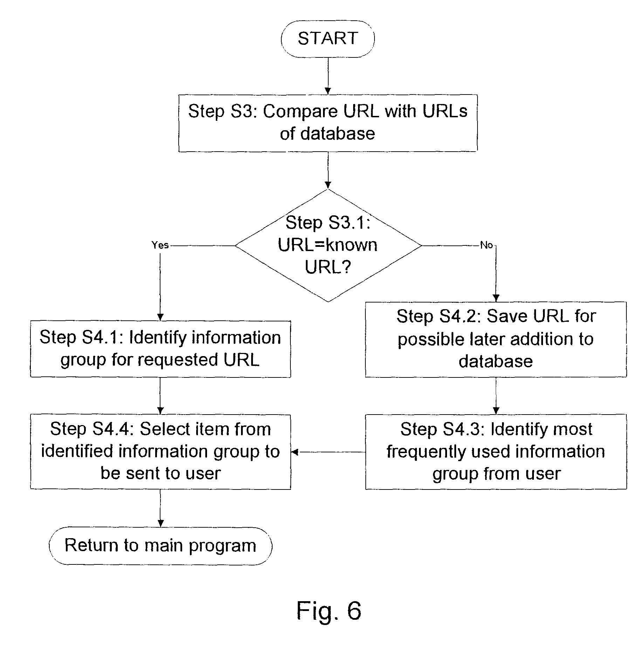

The software program comprises the steps of
□ **Step S1,** receiving a request for first pieces of information from a user unit (e.g. 11 in fig. 1) in the form of a URL (e.g. http://www.ericsson.com/WAP/),
□ **Step S2,** storing said requested URL in a memory,
□ **Step S3** (and step S3.1 in fig. 6) comparing said requested URL with known URLs of a database (e.g. 6 in fig. 3), said known URLs being organized in groups according to a predefined scheme (cf. e.g. 7 in fig. 3),
□ **Step S4.1** (cf. fig. 6) identifying a particular group of information among the groups of known URLs based on said comparison (e.g. COMMUNICATIONS),
□ **Step S4** (and step S4.4 in fig. 6) selecting a second piece of information to push to the user unit according to the identified group (cf. e.g. 9 in fig. 3), and
□ **Step S5,** attaching the requested URL to the selected second piece of information, and
□ **Step S6,** transmitting said second piece of information to said user unit.

In parallel with the above (cf. also fig. 2. and the corresponding description), the software program further carries out the following steps:
□ **Step S7,** transmitting the URL for the requested first pieces of information to the corresponding information server, and
□ **Step S8,** starting a timer,
□ **Step S9,** receiving and storing in a memory said requested first pieces of information from the corresponding information server, and
□ **Step S10,** checking whether the time (T in fig. 5) elapsed since the transmission of the requested URL is greater than a predefined time (Tpreset in fig. 5), and if so
□ **Step S11,** transmitting said requested first pieces of information to said user unit, and if not,
□ (Step S10) waiting until T>Tpreset before transmitting requested first pieces of information to said user unit.

As also mentioned in relation to fig. 2, the request for information 101 from the user unit may be transmitted to the information server 5 on the Internet 4 from the WAP Gateway server 3 before or after the point in time where a package 102 of information is pushed to the user unit 1 from the WAP Gateway server 3 (cf. Step 7 above).

In a special embodiment of the invention, a timer is included in Step S6 to be able to monitor and control the duration of a given second piece of information pushed to the user unit.

Fig. 6 shows a flowchart of details of a software program for a server according to the invention.

In a subroutine of the program detailing the process of selecting the information to push to the user, as illustrated by fig. 6, the following steps are carried out:
□ **Steps S3 and S3.1,** comparing said requested URL with known URLs of a database (e.g. 6 in fig. 3), said known URLs being organized in groups according to a predefined scheme (cf. e.g. 7 in fig. 3);
□ **Step S4.1,** if a match with a known URL of the database is found in step S3.1 (or at least to a part of it), the group from which to pick the information to be pushed to the user unit is identified, and
□ **Step S4.2,** if no match is found in step S3.1, the requested URL is stored in a memory for possible later addition to the database of known URLs, and
□ **Step S4.3,** identifying the most frequently requested group of information among the groups of the database for the user in question, and
□ **Step S4.4,** selecting an item from the identified group of information to be pushed to the user, before
□ returning to the main program.

In a special embodiment of the invention the information pushed to the user unit may be chosen from a DEFAULT group, which may be a general or customer specific or other predefined group.

A computer readable medium having a program recorded thereon, where the program when executed is to make the computer execute the method described above and in the claims, is likewise an embodiment of the invention.

A computer system having means for executing a program, where the program when executed is to make the computer execute the method described above and in the claims, is likewise an embodiment of the invention.

A software program, which can be used to execute the method described above and in the claims, is likewise an embodiment of the invention.

A technical solution has been described above. Maybe some would argue and ask why the end user would accept this. There may, however, be some commercial incentives to do so. The end user will see a couple of problems when he/she is going to start using the WAP browser:
□ Connection time: normal modem connection 20-30 seconds and direct Internet connection 2-5 seconds.
□ High cost when connected.
□ Internet subscription needed. This is mainly an issue between the GSM (or other network) operator and the end user.

If the operator gives the end user an offer to solve this, maybe it is OK to have some un-requested information coming down now and then. The offer could e.g. be a maximum of 10 seconds of push information and free Internet access.

This means that the operator/service provider has a possibility of pushing information, which possibly is the only good way to handle this in comparison with how this could be done with a HTML browser. Considering the value of advertising, this could be extremely valuable in the WAP environment. It could also possibly be used within other types of micro-browsers.

Some preferred embodiments based on cellular phones equipped with a WAP browser for communication with the Internet via a WAP Gateway server have been shown in the foregoing, but it should be stressed that the invention is not limited to these, but may be embodied in other ways within the subject-matter defined in the following claims. For example, other terminals having limited resources as regards display, bandwidth, computing power, memory, etc. may be equipped with a WAP browser (or any other micro-browser) and used within the scope of the invention. The invention may be used with any digital communications system, be it mobile or not, for which the presentation of dedicated information (be it personalized or not) in a limited resources environment is of interest.

## Claims

1. A method of utilizing the time span between a request (101) for first pieces of information from a user unit (1; 11) to an information server (5) via a node (2) in a network and the reception of said first pieces of information (108) at the user unit (1; 11),
**characterized** in that
second pieces of information (102, 104, 105, 106) are transmitted from the node (2) to the user unit (1; 11) in the time span between the reception at the node (2) of the request (101) from the user unit (1; 11) for first pieces of information, and the transmission to the user unit (1; 11) of the first pieces of information (108) received at the node (2) from the information server (5).

2. A method according to claim 1,
**characterized** in that
second pieces of information (102, 104, 105, 106) are transmitted from the node (2) to the user unit (1; 11) in the time span between the reception at the node (2) of the request (101) from the user unit (1; 11) for first pieces of information, and the reception of the first pieces of information (107) at the node (2).

3. A method according to claim 1 or 2,
**characterized** in that
the time span between the reception at the node (2) of the request (101) from the user unit (1; 11) for first pieces of information, and the transmission to the user unit (1; 11) of the first pieces of information (108) received at the node (2) from the information server (5) is greater than a predefined minimum value (Tpreset).

4. A method according to any one of claims 1 to 3,
**characterized** in that
the requests (101) for first pieces of information are defined by a resource locator, for example a URL.

5. A method according to claim 4,
**characterized** in that
the second pieces of information (102, 104, 105, 106) that are pushed to the user unit (1; 11) are provided with the same resource locator as that of the requested first pieces of information.

6. A method according to any one of claims 1 to 5,
**characterized** in that
the contents of the second pieces of information (102, 104, 105, 106) are determined by another party than the user.

7. A method according to claim 6,
**characterized** in that
the second pieces of information (102, 104, 105, 106) are advertisements.

8. A method according to any one of claims 1 to 5,
**characterized** in that
the contents of the second pieces of information (102, 104, 105, 106) are determined by the user in the form of e-mail, news, travel reports or other information chosen in accordance with stated user preferences.

9. A method according to any one of claims 1 to 8,
**characterized** in that
the second pieces of information (102, 104, 105, 106) are customized according to the location of the user unit, the date or some other special criterion.

10. A method according to any one of claims 1 to 9,
**characterized** in that
the request from the user unit (101) is made by means of a browser, for example a WAP browser.

11. A method according to any one of claims 1 to 10,
**characterized** in that
a new request for first pieces of information is initiated on the basis of second pieces of information (102, 104, 105, 106).

12. A method according to any one of claims 1 to 11,
**characterized** in that
the communication between the user unit (1; 11) and the information server (5) is performed via a data communications network, for example the Internet (4) or an intranet.

13. A method according to any one of claims 1 to 12,
**characterized** in that
the node (2) is located at the central office of a provider of access to the Internet for the user unit (1; 11), for example a provider of mobile communications services for the user unit (1; 11).

14. A method according to any one of claims 1 to 13,
**characterized** in that
the user unit (1; 11) is a mobile communications unit (11), for example a cellular telephone or a personal organizer.

15. A method according to any one of claims 1 to 14,
**characterized** in that
a database (6) of information is used to define the contents of second pieces of information (102, 104, 105, 106) to be transmitted from the node (2) to the user unit (1; 11).

16. A method of utilizing the time span between a request (101) for first pieces of information from a user unit (1; 11) to an information server (5) via a node (2) in a network and the reception of said first pieces of information (108) at the user unit (1; 11),
**characterized** in that
second pieces of information (102, 104, 105, 106) are transmitted from the node (2) to the user unit (1; 11) after the reception at the node (2) of the request (101) from the user unit (1; 11) for first pieces of information, and a database (6) of information is used to define the contents of said second pieces of information (102, 104, 105, 106).

17. A method according to claim 15 or 16,
**characterized** in that
the database of information (6) is searchable with respect to elements of said requests (101), and the database (6) contains additional information (9) related to said elements of said requests, and criteria for relating elements of said requests (101) to said additional information (9) are established.

18. A method according to claim 17,
**characterized** in that
the method comprises the use of a database (6), said database (6) comprising a list of requests (7) for first pieces of information subdivided into groups according to a predefined scheme, for providing information to a user unit (1; 11), and the steps of comparing a received request (101) for first pieces of information from a user unit (1; 11) with said list of requests (7) for first pieces of information, thus identifying a group of information, and providing a second piece of information to the user unit (1; 11) corresponding to the identified group.

19. A method according to claim 17 or 18,
**characterized** in that
the list of requests (7) for first pieces of information in the database (6) of information is regularly updated, for instance according to frequently used requests.

20. A method according to any one of claims 17 to 19,
**characterized** in that
the second pieces of information (9) in the database (6) are regularly updated.

21. A method according to any one of claims 17 to 20,
**characterized** in that
the response times at different points in time for at least some of the requested resource locators are recorded in the database (6) and used to define the duration of the second pieces of information (102, 104, 105, 106).

22. A method according to any one of claims 1 to 21,
**characterized** in that
the method comprises the steps of
(Step S1) receiving a request (101) for first pieces of information from a user unit (1; 11) in the form of a resource locator,
(Step S2) saving said requested resource locator,
(Step S3) comparing said requested resource locator with known resource locators (7) of a database (6), said known resource locators (7) being organized in groups according to a predefined scheme,
(Step S4.1) identifying a particular group of information among the groups of known resource locators (7) based on said comparison,
(Step S4.4) selecting a second piece of information to push to the user unit (1; 11) according to the identified group, and
(Step S6) transmitting said second piece of information (102) to said user unit (1; 11).

23. A method according to claim 22,
**characterized** in that
the method further comprises the step of
(Step S5) attaching the requested resource locator to the selected second piece of information (102) before transmitting it to the user unit (1; 11).

24. A method according to claim 22 or 23,
**characterized** in that
several second pieces of information (102, 104, 105, 106) are transmitted to the user unit (1; 11).

25. A method according to any one of claims 22 to 24,
**characterized** in that
the method further comprises the steps of
(Step S7) transmitting said request for first pieces of information to the corresponding information server (5), and
(Step S9) receiving said requested first pieces of information (107) from the corresponding information server (5), and
(Step S11) transmitting said requested first pieces of information (108) to said user unit (1; 11).

26. A method according to claim 25,
**characterized** in that
the method further comprises the step of
(Step S9) storing said requested first pieces of information (107) from the corresponding information server (5) before they are transmitted to the user unit (1; 11).

27. A method according to any one of claims 22-26,
**characterized** in that
the method comprises the step of
(Step S4.1) identifying a particular group of information among the groups of known resource locators (7) according to said comparison, if a match with said requested resource locator is found among the known resource locators (7) of the database (6), and
identifying a particular group of information among the groups of known resource locators (7) according to a predefined scheme, if no match with said requested resource locator is found among the known resource locators (7) of the database (6).

28. A method according to any one of claims 22-27,
**characterized** in that
the method further comprises the step of
(Step S4.2) saving said requested resource locator for possible later addition to the database of known resource locators if no match with said requested resource locator is found among the known resource locators (7) of the database (6).

29. A method according to any one of claims 22-28,
**characterized** in that
the method further comprises the steps of
(Step S4.3) identifying the most frequently requested group or groups of information from a given user unit (1; 11), and
(Step S4.4) selecting second pieces of information (102, 104, 105, 106) to push to the user unit (1; 11) according to said most frequently requested group of information, if no match with said requested resource locator is found among the known resource locators (7) of the database (6).

30. A method according to any one of claims 25-29,
**characterized** in that
the method further comprises the steps of
(Step S8) starting a timer when transmitting the request for first pieces of information (103) to the corresponding information server (5), and
(Step S10) checking the timer when receiving said requested first pieces of information (107) from the corresponding information server (5), and
(Step S11) transmitting the requested first pieces of information (108) to the user unit (1; 11), if the checked time is greater than a predefined time (Tpreset), and
delaying the transmission of the requested first pieces of information (108) to the user unit (1; 11), if the checked time is less than a predefined time (Tpreset), until the predefined time (Tpreset) has elapsed before transmitting the requested first pieces of information (108) to the user unit (1; 11).

31. A computer readable medium having a program recorded thereon, where the program when executed is to make the computer execute the method according to claims 1-30.

32. A computer system having means for executing a program, where the program when executed is to make the computer execute the method according to claims 1-30.

33. A software program, which can be used to execute the method according to claims 1-30.
